# EUROPEAN PATENT APPLICATION

(11) **EP 3 620 950 A1**
(43) Date of publication of application: **11.03.2020**
(21) Application number: 18192496.0
(22) Date of filing: 04.09.2018
(51) Int. Cl.: G06K 9/00, G06K 9/62, G06K 9/46

(54) **BUILDING A MACHINE-LEARNING MODEL WITH IMPROVED FEATURE DISTRIBUTION**

(71) Applicant: Siemens Aktiengesellschaft, 80333 München (DE)
(72) Inventor: Geipel, Markus Michael, 80799 München (DE); Mittelstädt, Sebastian, 81541 München-Haidhausen (DE)

(57) **Abstract**

The invention relates to a method of building a deep-learning classifier machine-learning model (300) for operational monitoring of an ensemble (200) of field devices (201-204), comprising: performing a training of one or more feature recognition algorithms (93) of the deep-learning classifier machine-learning model (300) using labeled training data (99) obtained from the ensemble (200) of field devices (201-204), the training being based on a prediction error signal (95) and a further error signal (7012); and determining the further error signal based on a difference between density estimations (7011) of features recognized by the one or more feature recognition algorithms (93) using the labeled training data (99) of different ones of the ensemble (200) of field devices (201-204).

## Description

### TECHNICAL FIELD

Various examples of the invention generally relate to building MLMs for operational monitoring of an ensemble of field devices.

### BACKGROUND

Machine learning is employed in various use cases. An example use case includes operational monitoring for industrial applications. Here, typically an ensemble of field devices is deployed (sometimes, each individual field device is referred to as asset and the ensemble is referred to as fleet). One or more operational states of the field devices are to be monitored using machine learning. For example, machine learning can be utilized for novelty detection or predictive maintenance of technical system. Failure modes can be recognized. Generally, a machine-learning model (MLM) can be used to recognize features or abnormalities in state data determined based on measurement data of one or more sensors of the field devices. An example of a MLM is a deep-learning (DL) MLM.

Building a MLM can include various tasks. For example, one or more hyperparameters of the MLM may have to be defined. Further, once the hyperparameters of the MLM have been set, the parameters of the MLM need to be defined. This is usually done using training and/or manual input from a domain expert.

It is generally required to build MLMs that adequately recognize features of the operation of individual field devices of the ensemble. Building MLMs for an ensemble of field devices can be challenging, because individual field devices are often similar, but not the same. To give an example, gas turbines of a certain type are similar to each other, but different states of maintenance or geographical locations etc. can prevent simply using a single MLM for all gas turbines of the same type.

One approach is to individually build the MLMs for each individual field device. This can involve training of each individual MLM based on training data acquired for each individual field device. However, such an approach is, both, computationally expensive and labor intensive. Further, obtaining training data for a newly deployed field device can be time-consuming and may require a test phase to circumvent a so-called cold-start problem.

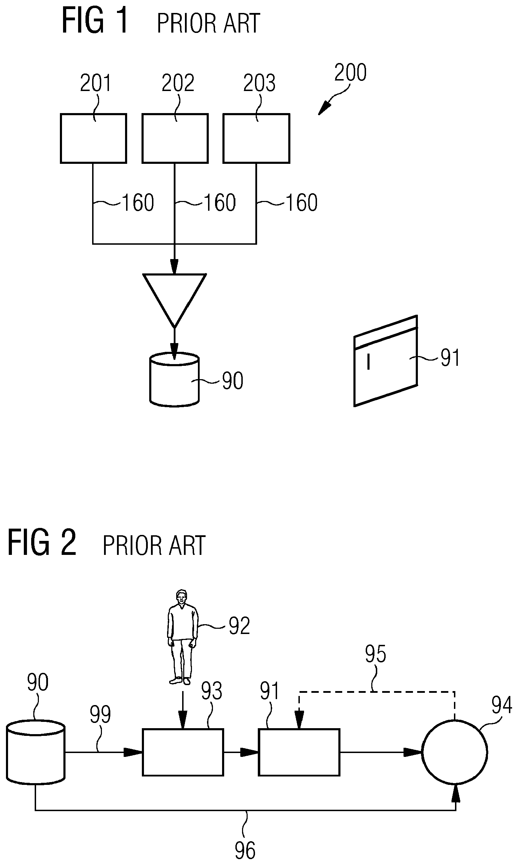

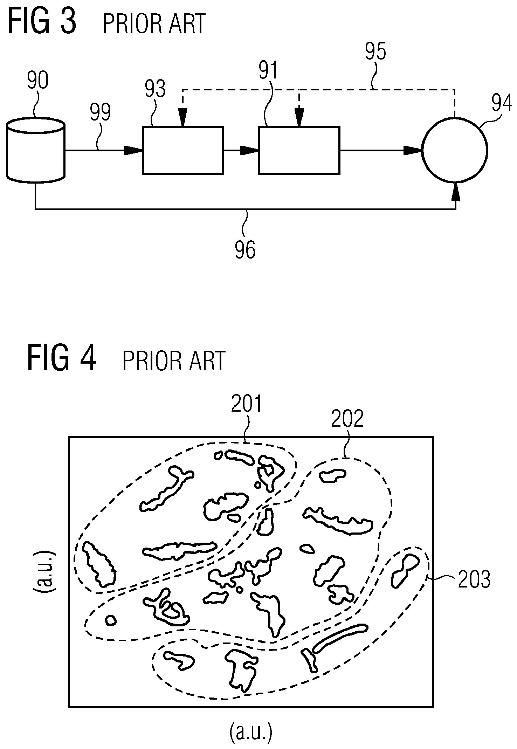

Another approach relies on using a single unified MLM that is trained using training data from field devices across the ensemble. An example scenario is schematically illustrated in FIG. 1. Here, training data 99 available for field devices 201-203 of an ensemble 200 are merged to a common data pool 90. Based on the training data 99, a unified MLM 91 is built and used for operational monitoring of each field device 201-203. Thus, individual field devices do not use individual MLMs, but rather a unified MLM. For example, as illustrated in FIG. 2, when building such a unified MLM 91, a domain expert 92 can create a set of features of a feature calculator 93. Then, the feature calculator can calculate features based on the training data 99 obtained from the common data pool 90. The MLM 91 can then be trained using an error calculator 94 operating based on a ground truth 96 that is, e.g., indicative of the class represented by the respective training data 99 - and an associated prediction error signal 95 fed back to the MLM 91. An iterative optimization could be performed to minimize the prediction error signal 95. A variation of gradient descent can be employed. FIG. 3 schematically illustrates a similar scenario for a deep-learning MLM 91 where the feature calculator 92 is also trained based on the prediction error signal 95, when building the MLM 91.

Generally, the accuracy of an MLM built from conventional techniques can be limited. For example, certain tests data available for a first field device of the ensemble may not be appropriately describing the operation of a second field device of the ensemble.

In detail, where a single DL MLM is employed across the ensemble of field devices 201-203 (cf. FIG. 1, FIG. 2, and FIG. 3), the trained features tend to overfit the specific field device seen during the training. In other words, where training data of a certain field device is retrieved from the common data pool 90, the respectively trained features of the feature calculator 93 can be specific to that field device. For a further field device, other features can be trained that have no or limited overlap with the features previously trained for the feature calculator. This is illustrated in FIG. 4. FIG. 4 illustrates the feature space projected down to 2-D. Each point in FIG. 4 is a feature vector. Features trained on a given field device 201-203 are grouped. It can be seen that the feature clusters of the different field devices 201-203 hardly overlap. Hence, the capability to generalize the DL MLM to new field devices is deteriorated.

### SUMMARY

Accordingly, there is a need for advanced techniques of building MLMs for operational monitoring of an ensemble of field devices. Specifically, there is a need for techniques which overcome or mitigate at least some of the above-identified drawbacks and limitations.

This need is met by the features of the independent claims. The features of the dependent claims define embodiments.

A method of building a deep-dearning (DL) classifier MLM for operational monitoring of an ensemble of field devices includes performing a training of one or more feature recognition algorithms of the DL classifier model, using labeled training data obtained from the ensemble of field devices. This training is based on a prediction error and a further error. The method also includes determining the further error based on a difference between density estimations of features detected by the one or more feature recognition algorithms using the labeled training data of different ones of the field devices of the ensemble.

The training of the one or more feature recognition layers can correspond to "building" features that are recognized by the one or more feature recognition algorithms. This is sometimes referred to as "feature learning". For example, the labeled training data may be obtained from a common data pool, as described in connection with Fig. 1.

As a general rule, the density estimations may be determined using one or more of a kernel density model, a Gaussian mixture model, and a Gaussian Latent Variable model. As a general rule, the density estimation and/or the difference between density estimations may be explicitly modeled or approximated. The density estimations can be indicative of a feature distribution of the built features in the feature space.

For example, the one or more feature recognition algorithms could be implemented by one or more feature layers of an artificial neural network, e.g., by one or more convolutional layers in an convolutional neural network. In other types of MLMs, other kinds and types of feature recognition algorithms can be employed.

For example, the prediction error signal may describe a difference between an output of the DL classifier MLM and the labeled classes of the training data. To give an example: the training data may either be indicative of normal operation or abnormal operation of the corresponding field device; this binary classification may be labeled in the training data. Then, the output of the DL classifier MLM may accordingly be indicative of normal operation or abnormal operation; the difference between the labels of the training data and this output can be used to determine the prediction error signal.

The density estimations may provide for a measure of a density of feature vectors as a function of position in feature space (feature distribution). For example, it would be possible to feed labeled training data obtained from a first field device to the training of the one or more feature recognition algorithms of the DL classifier MLM and to determine a first density estimation of the correspondingly trained features. Then, labeled training data obtained from a second field device can be fed to the training of the one or more feature recognition algorithms and a second density estimation of the correspondingly trained features can be determined.

Generally, due to differences in the training data obtained from the first field device and from the second field device, it can be expected that the first and second density estimations differ from each other. On the other hand, it can be desired to reduce or limit a magnitude of this difference between the first and second density estimations. The idea is to avoid distinct sub-spaces formed within the feature space for different field devices of the ensemble. Namely, such distinct sub-spaces would limit the applicability of the DL classifier MLM to accurately interpret state data of newly added field devices that were not considered during training. By considering this further error signal - which is based on the difference between the density estimations of the features detected by the one or more feature recognition algorithms using the labeled training data of different ones of the ensemble of field devices -, such distinct sub-spaces can be penalized during the training. This facilitates building of a unified DL classifier MLM that can be used to adequately interpret state data obtained from various field devices of the ensemble, even such field devices for which no labeled training data was available during the training of the one or more feature recognition algorithms.

A device for building a DL classifier MLM for operational monitoring of an ensemble of field devices includes control circuitry. The control circuitry is configured to perform a training of one or more feature recognition algorithms of the DL classifier MLM. The training is performed using labeled training data obtained from the ensemble of field devices. The training is based on a prediction error signal and a further error signal. The control circuitry is further configured to determine the further error signal based on a difference between density estimations of features recognized by the one or more feature recognition algorithms using the labeled training data of different ones of the ensemble of field devices.

A computer program product or a computer program or a computer-readable storage medium includes program code. The program code can be executed by at least one processor. Executing the program code causes the at least one processor to perform a method of building a DL classifier MLM for operational monitoring of an ensemble of field devices includes performing a training of one or more feature recognition algorithms of the DL classifier model, using labeled training data obtained from the ensemble of field devices. This training is based on a prediction error and a further error. The method also includes determining the further error based on a difference between density estimations of features detected by the one or more feature recognition algorithms, using the labeled training data of different ones of the field devices of the ensemble.

Based on MLMs that are built in accordance with these techniques, it is then possible to perform the operational monitoring of the ensemble of field devices. For this, state data may be received from the ensemble of field devices and processed using MLMs. Then, it would be possible to detect abnormal conditions or a certain operational states, based on an output of the MLMs.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates transfer learning for an ensemble of field devices according to prior art techniques.
FIG. 2 schematically illustrates a techniques of performing training of a MLM.
FIG. 3 schematically illustrates techniques of performing training of a deep learning MLM.
FIG. 4 schematically illustrates a feature space obtained from prior art techniques of transfer learning of a deep learning MLM for an ensemble of field devices.
FIG. 5 schematically illustrates an ensemble of field devices according to various examples, each field device being associated with the respective MLM facilitating operational monitoring of the respective field device.
FIG. 6 schematically illustrates a device according to various examples.
FIG. 7 is a flowchart of a method according to various examples.
FIG. 8 schematically illustrates transfer learning to build a unified MLM according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various techniques described herein general relate to machine learning. Machine learning typically relies on a two-step approach: first, a training phase; and second, a prediction phase. In the training phase, values of one or more parameters of the MLM are set using training techniques and training data. In the prediction phase, the trained MLM operates on measurement data.

Example parameters of an MLM include: weights of neurons in a given layer of an artificial neural network (ANN) such as a convolutional neural network (CNN); kernel values of a kernel of a classifier; etc..

Building an MLM can include the training phase to determine the values of the parameters. Building an MLM can generally also include determining values of one or more hyperparameters. Typically, the values of one or more hyperparameters of the MLM are set and not altered during the training phase. Hence, the value of the hyperparameter can be altered in outer-loop iterations; while the value of the parameter of the MLM can be altered in inner-loop iterations. Sometimes, there can be multiple training phases, so that multiple values of the one or more hyperparameters can be tested or even optimized. The performance and accuracy of most MLMs are strongly dependent on the values of the hyperparameters.

Example hyperparameters include: number of layers in a convolutional neural network; kernel size of a classifier kernel; input neurons of an ANN; output neurons of an ANN; number of neurons per layer; learning rate; etc..

Various types and kinds of MLMs can be employed in the various examples described herein. For example, a novelty detector MLM / anomaly detector MLM, or a classifier MLM may be employed, e.g., a binary classifier. For example, a deep-learning (DL) MLM can be employed: here, features detected by the DL MLM may not be predefined, but rather may be set by the values of respective parameters of the model that can be learned during training (cf. FIG. 2 vs. FIG. 1).

As a general rule, various techniques can be employed for building the MLM. For example, typically, the type of the training can vary with the type of the MLM. Since the type of the MLMs can vary in different implementations, likewise, the type of the employed training can vary in different implementations. For example, an iterative optimization could be used that uses an optimization function that is defined with respect to one or more error signals. For example, a backpropagation algorithm can be employed. For examples, reference techniques as described in connection with FIG. 2 and FIG. 3 may be employed, where instead of the common data pool 90 a tailored data pool can be used.

Various techniques described hereinafter relate to operational monitoring of an ensemble of field devices. As a general rule, the techniques described herein can be applied to various kinds and types of field devices, in particular in an industrial environment. To give a few examples, the ensemble of field devices may relate to a fleet of gas turbines, pumps such as submersible pumps, or compressors. The ensemble of field devices may relate to a fleet of sensors monitoring a certain physical observable. For example, the ensemble of field devices may relate to multiple axle counters distributed across a railway network.

Various techniques described herein facilitate building an MLM that facilitates accurate operational monitoring of the field devices of the ensemble. Specifically, various techniques described herein facilitate building the MLM in a computationally inexpensive and labor efficient manner. At the same time, various techniques described herein facilitate building the MLM at a significant accuracy. A cold-start problem can be avoided by using various techniques as described herein.

Various techniques hence facilitate efficiently integrating new field devices into an ensemble or extending an existing ensemble by adding new field devices. Various techniques facilitate provisioning of the MLM that accurately interprets state signals of any field device in the ensemble in case of context changes and/or environmental changes across the ensemble, and/or in view of aging. Thereby, availability of the operational monitoring, quality and production gains can be achieved.

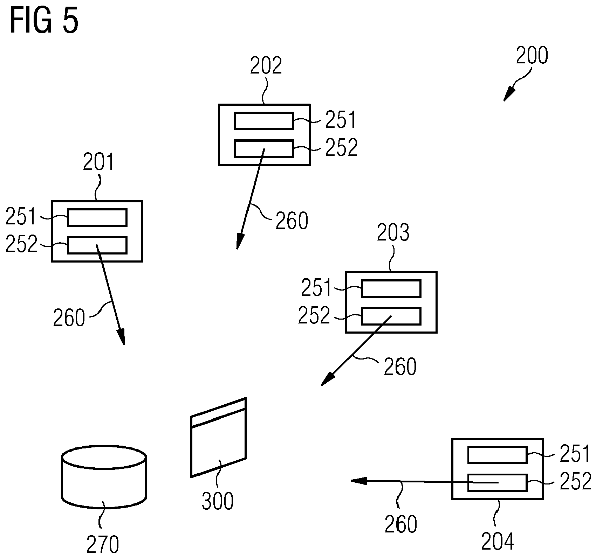

FIG. 5 schematically illustrates aspects with respect to an ensemble 200 of field devices 201-204. In the scenario of FIG. 5, the various field devices 201-204 of the ensemble 200 are deployed at different sites. They are, hence, subject to different environmental conditions. Depending on the particular field device 201-204, the maintenance state may vary. For example, different field devices 201-204 may operate based on different firmware, e.g., different firmware versions.

On the other hand, the various field devices 201-204 may be comparable with each other. For example, they may be of the same type or make. For example, the various field devices 201-204 could be all pumps of the same kind.

In the scenario of FIG. 5, the field devices 201-204 all include a respective sensor 251. Each sensor 251 is configured to acquire measurement data that is indicative of an operational state of the respective field device 201-204. For example, in case the field devices 201-204 are pumps, it would be possible that the sensors 251 measure vibrations or rounds per minute of the respective pumps. It would be possible that the temperature of the pumps is monitored. As will be appreciated, there is a wide variety of physical observables that could be monitored. In that sense, it is possible that each field device 201-204 includes multiple sensors.

In FIG. 5, the field devices 201-204 also include communication interfaces 252. The field devices 201-204 are configured to output state data 260 via the interfaces 252. The state data 260 enables the operational monitoring of the field devices 201-204. The field devices 201-204 can determine the state data 260 based on measurement data obtained from the sensors 251. The state data 260 can be a fingerprint of the operational state of the respective field device 201-204. For instance, it would be possible that the state data 260 includes a time series of the measurement data acquired by the respective sensor 251.

In the scenario FIG. 5, the state data 260 is written to the database 270. Thereby, fleet management of the various field devices 201-204 can be implemented, by accessing the database 270 that includes the state data 260 for the ensemble 200. Also illustrated in FIG. 5 are aspects with respect an MLM 300. The shared MLM 300 can be used for operational monitoring of any field device 201-204 of the ensemble.

For example, it would be possible to detect anomalies in the state data 260, using a novelty detector as MLM. Then, irregularities in the operation - such as wear-out or damages - can be detected. Maintenance can then be triggered. Also, it would be possible to detect certain features in the state data 260, using a classifier. Thereby, the current operational state of each individual field device 201-204 can be classified within a set of classes. For example, normal operation, critical operation or breakdown could be example classes that are detected from corresponding features included in the state data 260, using the MLM 300.

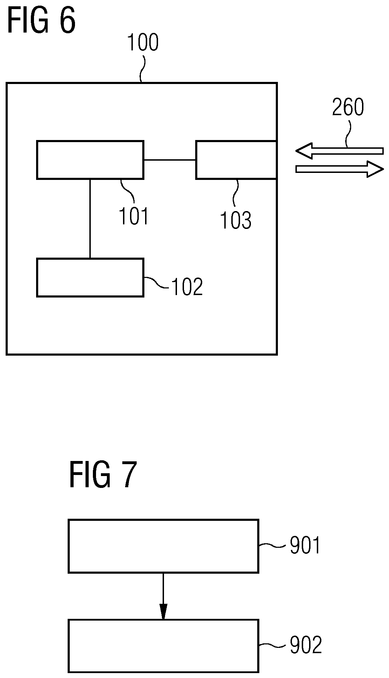

FIG. 6 schematically illustrates aspects with respect to a device 100 that can be configured to execute such an operational monitoring of the ensemble 200 of field devices. The device 100 includes a processor 101 and a memory 102. The processor 101 can load program code from the memory 102 and execute the loaded program code. Then, the processor 101 can perform techniques as described herein with respect to a MLM for one or more field devices of an ensemble of field devices; operational monitoring of the ensemble of field devices based on the MLM; etc. The processor 101 and the memory 102 hence implement a control circuitry.

The device 100 includes a communication interface 103. For example, the device 100 may receive the state data 260 via the interface 103, e.g., directly from the field devices 201-204 or from the database 270. It would also be possible that the device 100 accesses the database 270 for reading and/or writing values of the hyperparameters 351 or values of the parameters 352, to facilitate the transfer learning 399.

FIG. 7 is a flowchart of a method according to various examples. For example, the method of FIG. 7 may be executed by the control circuitry 101, 102 of the device 100 according to FIG. 6. FIG. 7 illustrates a method with respect to building a DL classifier MLM for operational monitoring of an ensemble of field devices. For example, the ensemble 200 of field devices 201-204 as illustrated in FIG. 5 may be subject to the operational monitoring. The techniques of FIG. 7 facilitate building the MLM with reduced or eliminated device-specific features. Thereby, a unified MLM that is capable of correctly interpreting state data 260 for the various field devices of the ensemble is obtained (cf. FIG. 5: unified MLM 300). This is achieved by considering an error signal indicative of differences in the feature distributions between features built based on labeled training data obtained from different field devices when configuring one or more feature recognition algorithms of the DL classifier MLM.

At block 901, the training of the one or more feature recognition algorithms of the DL classifier MLM is performed, using labeled training data. The labeled training data is obtained from the ensemble of field devices. The training can be conventionally based on a prediction error signal. Further, the training can be based on a further error signal.

The further error signal is determined at block 902. For example, the further error signal can be determined based on a difference between density estimations of features recognized by the one or more feature recognition algorithms using the labeled training data of different ones of the ensemble of field devices.

In further detail, when the DL classifier MLM is built, a first step may include performing the training using labeled training data from a first one of the field devices. A second step may include performing the training using labeled training data from a second one of the field devices. The feature recognition algorithms, based on the training, are configured to recognize different features, due to the different labeled training data (cf. FIG. 3). The density estimations specify the position of these different features in feature space, i.e., the feature distributions of the trained features. The difference between the density estimations provides for a measure of how different the features recognized by the feature recognition algorithms for the first training data and the second training data are. Larger differences can be penalized in the training by means of the further error signal.

As a general rule, it would be possible that the training executed at block 901 includes an iterative optimization that has an optimization function that includes the prediction error signal and the further error signal. Then, in this iterative optimization, the configuration of the one or more feature recognition algorithms can be appropriately adjusted from iteration to iteration to minimize the optimization function: thus, there is a tendency that the prediction error signal and the further error signal are minimized. This, in turn, means that the differences in the density estimations of the features recognized by the one or more feature recognition algorithms of the DL classifier MLM based on different training data (obtained from different ones of the field devices) are reduced. Device-specific features are thereby avoided. A unified DL classifier MLM becomes possible.

Reference implementations that provide for a similar effect include domain adversarial neural networks (DANN). See, e.g., Ganin, Yaroslav, et al. "Domain-adversarial training of neural networks." The Journal of Machine Learning Research 17.1 (2016): 2096-2030. gray. The idea of DANNs is to add another classification network parallel to the original DL classifier MLM or regressor. The new classifier has, as the target, the identity of the field device. This means it learns to infer the field device based on the features of the one or more feature recognition algorithms of the DL classifier MLM. During the training, the DANN error signal is back-propagated through the new classifier similar to the original one. The gradient is however negated when propagated back to the one or more feature recognition algorithms. The effect is that the one or more feature recognition algorithms receive a second objective which is to build features that make it hard to infer the identity of the field device from. Such techniques using DANNs face certain restrictions and drawbacks: First, class distributions can sometimes be highly different between field devices. Such a difference identifies field devices independently of the mixing of features between field devices. This ill posed objective propagated to the one or more feature recognition algorithms may severely impair the building of good features. Second, in the case of anomaly detection, often the type of anomaly is highly indicative of the field device. The effect on the feature building is analog to the previous point. The techniques described herein allow to overcome or mitigate such drawbacks of DANNs.

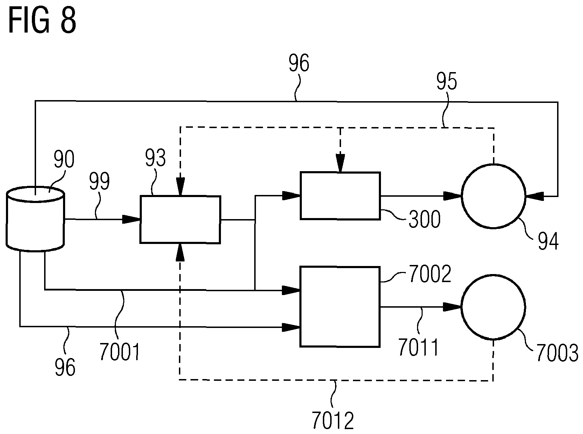

FIG. 8 schematically illustrates aspects with respect to transfer learning when building a DL classifier MLM 300 that can accurately operate on state data 260 received from various field devices 201-204 of an ensemble 200 (cf. FIG. 5).

The example of FIG. 8 generally corresponds to the example of FIG. 2. In the example of FIG. 8, an additional error signal 7012 is provided to the one or more feature recognition algorithms 93 of the MLM 300. In detail, a density estimator 7002 determines the density estimations 7011, i.e., the feature distributions of features recognized by the one or more feature recognition algorithms 93 when operating based on labeled training data 99 of different ones of the field devices 201-204. In the scenario of FIG. 8, the identity of a current field device 201-204 associated with the current labeled training data 99 is provided to the density estimator 7002. This facilitates determining different density estimations 7011 for different field devices 201-204.

As illustrated in FIG. 8, the density estimator 7002 is conditioned on the respective class indicated by the ground truth 96. I.e., the density estimator 7002 determines the density estimations 7011 for the features recognized by the one or more feature recognition algorithms 93 individually for each labeled class of the labeled training data 99. The difference between the density estimations is calculated by the error signal generator 7003 for a same class of a plurality of classes represented by the training data. This is based on the assumption that the feature distribution will inevitably vary for different classes.

In short, the density estimator 7002 can model *P(feature* / *field device ID*, *class).* The error signal 7012 is then generated by the generator 7003 by measuring the difference in distribution between different field devices (for the same class). Different difference metrics are possible: mean squared difference, alpha-divergence, etc..

Thus, if there are two field devices, the error signal 7012 is given by: *difference [P(feature* / *field device A*, *class)*, *P(feature* / *field device B, class)].*

Sometimes, different density estimations 7011 may also be determined for different points in time. Hence, the error signal 7012 may be determined resolved in time domain. Thereby, the impact of shifts in the feature distribution over time can be mitigated.

The generalization to more field devices can be achieved by taking the average difference between field devices. In other words, the error signal 7012 can be determined as the average pairwise difference between the density estimations of the features recognized by the one or more feature recognition algorithms using the labeled training data 99 of three or more field devices of the ensemble of field devices.

Another option for the generalization to more field devices is achieved by taking the difference of the density estimation of a given field device P*(feature* / *field device A*, *class)* to the density estimation without conditioning on the device: *P(feature* / *class).* In other words, the error signal 7012 can be determined as the difference between (i) the density estimation of features recognized by the one or more feature recognition algorithms 93 using the labeled training data 99 of a given one of the ensemble 200 of field devices 201-204, and (ii) the density estimation of features recognized by the one or more feature recognition algorithms 93 using the labeled training data 99 of multiple field devices 201-204 of the ensemble 200.

Summarizing, techniques of calculating the density estimation of the feature distribution per field device and target class have been described. This is used to generate an additional error signal for the feature recognition algorithm, thereby penalizing differences in the feature distributions between field devices.

Thereby, it is possible to build DL classifier MLMs that are transferable to field devices newly added to the ensemble, not seen in the training. This means that a DL classifier MLM may be built and re-used for an entire ensemble of field devices instead of training individual DL classifier MLMs per field devices (cf. FIG. 5). The results are reduced training costs, reduced administration of a large number of DL classifier MLMs, and finally, mitigation of the cold-start problem. In other words, DL classifier MLMs that generalize can be immediately applied to new field devices even when no training data for this specific field device has been collected yet. As the DL classifier MLMs become less device-specific and thus reusable for an entire ensemble of similar devices, training time, computation costs and administrative costs are reduced. As already mentioned a transferable DL classifier MLMs also remedies the cold-start-problem.

## Claims

1. A method of building a deep-learning classifier machine-learning model (300) for operational monitoring of an ensemble (200) of field devices (201-204), comprising:
- performing a training of one or more feature recognition algorithms (93) of the deep-learning classifier machine-learning model (300) using labeled training data (99) obtained from the ensemble (200) of field devices (201-204), the training being based on a prediction error signal (95) and a further error signal (7012), and
- determining the further error signal based on a difference between density estimations (7011) of features recognized by the one or more feature recognition algorithms (93) using the labeled training data (99) of different ones of the ensemble (200) of field devices (201-204).

2. The method of claim 1,
wherein the further error signal is determined based on the difference between the density estimations (7011) of the features detected using the labeled training data (99) obtained from the different field devices (201-204) for a same class of a plurality of classes represented by the labeled training data (99).

3. The method of claim 1 or 2,
wherein the density estimations (7011) are determined using one or more of a kernel density model, a Gaussian mixture model, and a Gaussian Latent Variable model

4. The method of any one of the preceding claims,
wherein the training comprises an iterative optimization having an optimization function comprising the prediction error signal and the further error signal.

5. The method of any one of the preceding claims,
wherein the further error signal is determined as the average pairwise difference between the density estimations (7011) of the features recognized by the one or more feature recognition algorithms (93) using the labeled training data (99) of three or more field devices (201-204) of the ensemble (200) of field devices (201-204).

6. The method of any one of the preceding claims,
wherein the further error signal is determined as the difference between the density estimation of features recognized by the one or more feature recognition algorithms (93) using the labeled training data (99) of a given one of the ensemble (200) of field devices (201-204) and the density estimation of features recognized by the one or more feature recognition algorithms (93) using the labeled training data (99) of multiple field devices (201-204) of the ensemble (200) of field devices (201-204).

7. The method of any one of the preceding claims,
wherein the further error signal is determined resolved in time domain.

8. The method of any one of the preceding claims,
wherein the ensemble (200) (200) of field devices (201-204) (201-204) comprises field devices (201-204) (201-204) of the same device type at multiple sites.

9. A device (100) for building a deep-learning classifier machine-learning model (300) for operational monitoring of an ensemble (200) of field devices (201-204), the device (100) comprising a control circuitry (101, 102) configured to:
- perform a training of one or more feature recognition algorithms (93) of the deep-learning classifier machine-learning model (300) using labeled training data (99) obtained from the ensemble (200) of field devices (201-204), the training being based on a prediction error signal and a further error signal, and
- determine the further error signal based on a difference between density estimations (7011) of features recognized by the one or more feature recognition algorithms (93) using the labeled training data (99) of different ones of the ensemble (200) of field devices (201-204).

10. The device (100) of claim 9,
wherein the control circuitry (101, 102) is configured to perform the method of any one of claims 1 to 9.
